# EUROPÄISCHE PATENTSCHRIFT

(11) **EP 3 819 980 B1**
(45) Veröffentlichungstag und Bekanntmachung des Hinweises auf die Patenterteilung: **19.02.2025**
(21) Anmeldenummer: 20199806.9
(22) Anmeldetag: 02.10.2020
(51) Int. Cl.: H01M 50/224, H01M 50/249, B60L 50/60, B60L 15/00

(54) **BATTERIESYSTEM**
BATTERY SYSTEM
SYSTÈME DE BATTERIE

(30) Priorität: 08.11.2019 DE 102019217296
(43) Veröffentlichungstag der Anmeldung: 12.05.2021
(73) Patentinhaber: Robert Bosch GmbH, 70442 Stuttgart (DE)
(72) Erfinder: Oechsle, Matthias, 71254 Ditzingen-Hirschlanden (DE); Stegmueller, Holger, 71032 Boeblingen (DE); Dittert, Thomas, 70199 Stuttgart (DE); Schmitt, Markus, 71732 Tamm (DE); Gross, Andre, 76703 Kraichtal (DE); Kroeger, Steve, 70499 Stuttgart (DE); Baumann, Stefan, 72657 Altenriet (DE); Kohn, Peter, 70469 Stuttgart (DE); Koehl, Felix, 71522 Backnang (DE); Behm, Henrik Wolfgang, 72770 Reutlingen (DE); Kohler, Robert, 70435 Stuttgart (DE); Einsiedel, Philipp, 74599 Wallhausen (DE)

(56) Entgegenhaltungen:
- WO-A1-2012/090523
- JP-A- 2011 138 685
- JP-B2- 4 832 225
- US-A1- 2011 261 551

## Beschreibung

Die Erfindung betrifft ein Batteriesystem, das ein metallisches Batteriegehäuse und ein metallisches Komponentengehäuse umfasst, wobei im Batteriegehäuse mindestens ein Batteriemodul mit mindestens einer Batteriezelle und eine Steuereinheit zur Steuerung und Überwachung des mindestens einen Batteriemoduls angeordnet sind und wobei im Komponentengehäuse mindestens eine elektrische Komponente angeordnet ist, die mit dem mindestens einen Batteriemodul elektrisch verbunden ist.

Die Erfindung betrifft ferner ein Kraftfahrzeug, dass mindestens ein erfindungsgemäßes Batteriesystem umfasst.

### Stand der Technik

Es zeichnet sich ab, dass in Zukunft vermehrt elektrisch angetriebene Kraftfahrzeuge zum Einsatz kommen werden. Solche elektrisch angetriebene Kraftfahrzeuge, wie z.B. Hybridfahrzeuge und Elektrofahrzeuge, umfassen jeweils ein Batteriesystem zur Energieversorgung. Dabei umfasst das Batteriesystem ein Batteriegehäuse zur Aufnahme mindestens eines Batteriemoduls und einer Steuereinheit zur Steuerung und Überwachung des mindestens einen Batteriemoduls. Das Batteriesystem kann ferner auch weitere elektrische Komponenten aufweisen, die in einem Komponentengehäuse oder in mehreren separaten Komponentengehäusen angeordnet sind.

Üblicherweise sind das Batteriegehäuse und das bzw. die Komponentengehäuse aus Metall hergestellt, um eine Schirmung von elektromagnetischen Störungen, eine hohe mechanische Festigkeit und/oder eine gute Wärmeabfuhr zu realisieren.

Um die elektromagnetischen Störungen zu schirmen, sind das Batteriegehäuse und das bzw. die Komponentengehäuse sowie die in den beiden Gehäusen angeordneten elektrischen Komponenten auf ein gemeinsames Massepotential gelegt.

Bei einem Fahrzeug ist das gemeinsame Massepotential die Karosserie bzw. der Rahmen. Als leitfähiges Teil, welches sich über das gesamte Fahrzeug erstreckt, dient es zugleich als Rückleiter für das Bordnetz. Somit muss zur Energieversorgung zu jedem Verbraucher nur eine Leitung verlegt werden.

Das Dokument US 2006/0169526 A1 offenbart einen Bleiakkumulator, der in einem Servolenkungssystem zur Stromversorgung verwendet wird.

Aus dem Dokument US 2015/0037647 A1 ist ein Batteriemodul bekannt, das in einem Gehäuse angeordnet ist. Im Gehäuse sind ebenfalls eine Batteriesteuereinheit und ein Gleichspannungswandler angeordnet.

Das Dokument WO 2012/090523 A1 offenbart ein elektrisches Fahrzeug umfassend Hochvoltbatterien und Niedervoltbatterien, einen Gleichspannungswandler und eine Steuerung, wobei das Gehäuse des Gleichspannungswandlers aus Metall besteht und durch einen Isolator vom metallischen Fahrzeuggestell elektrisch isoliert und über eine Erdung geerdet ist. Die Batterien sind über das Fahrzeuggestell geerdet, das Gehäuse des Gleichspannungswandler ist mit dem Batteriegehäuse mechanisch miteinander verbunden und elektrisch gegeneinander isoliert.

Das Dokument JP 4 832225 B2 offenbart ein Batteriesystem umfassend ein metallisches Batteriegehäuse und ein metallisches Komponentengehäuse, wobei im Batteriegehäuse mindestens ein Batteriemodul mit mindestens einer Batteriezelle angeordnet ist und im Komponentengehäuse mindestens eine elektrische Komponente angeordnet ist, wobei das Komponentengehäuse auf dem Batteriegehäuse angeordnet ist, wobei das Komponentengehäuse und das Batteriegehäuse mechanisch miteinander verbunden und elektrisch gegeneinander isoliert sind.

Das Dokument JP 2011 138685 A offenbart ein Batteriesystem, umfassend ein metallisches Batteriegehäuse und ein metallisches Komponentengehäuse, wobei im Batteriegehäuse mindestens ein Batteriemodul mit mindestens einer Batteriezelle angeordnet ist und wobei im Komponentengehäuse mindestens eine elektrische Komponente angeordnet ist, die mit dem mindestens einen Batteriemodul elektrisch verbunden ist, wobei das Komponentengehäuse auf dem Batteriegehäuse angeordnet ist, wobei das Komponentengehäuse und das Batteriegehäuse auf ein erstes Massepotential gelegt ist und das Komponentengehäuse auf ein zweites Massepotential gelegt ist.

### Offenbarung der Erfindung

Es wird ein Batteriesystem vorgeschlagen. Dabei umfasst das Batteriesystem ein metallisches Batteriegehäuse und ein metallisches Komponentengehäuse. Dabei sind im Batteriegehäuse mindestens ein Batteriemodul mit mindestens einer Batteriezelle und eine Steuereinheit zur Steuerung und Überwachung des mindestens einen Batteriemoduls angeordnet. Im Komponentengehäuse ist mindestens eine elektrische Komponente angeordnet, die mit dem mindestens einen Batteriemodul elektrisch verbunden ist.

Bevorzugt sind das Batteriegehäuse und das Komponentengehäuse jeweils aus Aluminiumguss hergestellt. Das Batteriegehäuse und das Komponentengehäuse weisen dabei jeweils eine Durchführung für Strom- und Signalübertragung auf.

Das mindestens eine Batteriemodul ist bevorzugt auf einem Boden des Batteriegehäuses angeordnet und weist einen Pluspol und einen Minuspol auf, zwischen denen die mindestens eine Batteriezelle geschaltet ist. Die mindestens eine Batteriezelle kann dabei kreiszylindrisch oder prismatisch ausgebildet sein.

Erfindungsgemäß ist das Komponentengehäuse auf dem Batteriegehäuse angeordnet. Dabei sind das Batteriegehäuse und das Komponentengehäuse mechanisch miteinander verbunden und elektrisch gegeneinander isoliert. Das Batteriegehäuse ist dabei auf ein erstes Massepotential gelegt, während das Komponentengehäuse auf ein zweites Massepotential gelegt ist. Dabei unterscheidet sich das erste Massepotential vom zweiten Massepotential. Denkbar ist, dass das erste Massepotential ein Schwebepotential (engl.: floating potential) ist.

Zwischen dem Batteriegehäuse und dem Komponentengehäuse ist eine erste Temperierungseinrichtung ausgebildet, wobei die erste Temperierungseinrichtung gegen das Batteriegehäuse und das Komponentengehäuse isoliert ist, wobei die erste Temperierungseinrichtung derart ausgebildet ist, dass zwischen dem Batteriegehäuseoberteil und dem Komponentengehäuseunterteil eine Dichtung eingesetzt ist, wobei in einem durch die Dichtung umschlossenen Bereich zwischen dem Batteriegehäuseoberteil und dem Komponentengehäuseunterteil ein erster Temperierungskanal ausgeführt wird, oder die erste Temperierungseinrichtung als eine Peltier-Element-Einheit ausgebildet ist. [Seite 4, Zeilen 18 ff.]

Das Batteriegehäuse und das Komponentengehäuse sind elektrisch gegeneinander isoliert, wenn zumindest an den jeweiligen Verbindungsstellen zwischen dem Batteriegehäuse und dem Komponentengehäuse ein Isolator angeordnet ist.

Das Batteriegehäuse und das Komponentengehäuse können vorteilhaft stoffschlüssig, wie beispielsweise mittels Kleben, miteinander verbunden sein.

Das Batteriegehäuse und das Komponentengehäuse können aber auch vorteilhaft formschlüssig, wie beispielsweise durch Schrauben, miteinander verbunden sein. Beispielsweise weisen das Batteriegehäuse und das Komponentengehäuse dazu jeweils Befestigungsbohrungen auf. Die Befestigungsbohrungen des Komponentengehäuses können dabei jeweils als eine Durchgangsbohrung ausgebildet werden. Dabei können elektrisch nichtleitende Schrauben, wie beispielsweise Kunststoffschrauben, verwendet werden. Denkbar ist aber auch, dass elektrisch leitende Schrauben verwendet werden. Dabei können die jeweiligen Befestigungsbohrungen und Auflageflächen der Schraubenköpfe jeweils mit einem Isolator beschichtet sein. Denkbar ist auch, dass Schäfte der jeweiligen elektrisch leitenden Schrauben und Auflageflächen der Schraubenköpfe mit einem Isolator beschichtet werden. Zusätzlich zu der Beschichtung mit einem Isolator kann an beiden Enden der jeweiligen Befestigungsbohrungen des Komponentengehäuses jeweils eine Kegelsenkung vorgesehen werden. Darüber hinaus kann eine gleitende und zähe Schicht, wie beispielsweise eine Polyimid-Schicht, auf den Auflagerflächen der jeweiligen Schraubenköpfe aufgebracht werden, um eine Durchreibung der Beschichtung zu vermeiden.

Das Batteriegehäuse und das Komponentengehäuse sind dabei so ausgelegt, dass sie im Verbund die notwendige Widerstandsfähigkeit gegen unterschiedliche mechanische Lasten aufweisen.

Bevorzugt ist das Batteriegehäuse mit einem Isolator beschichtet. Der Isolator kann beispielsweise kathodischer Tauch-Lack sein. Denkbar ist auch, dass Harteloxal oder isolierendes Klebeband verwendet wird. Dabei kann der Isolator ausschließlich auf einer dem Komponentengehäuse zugewandten Oberfläche des Batteriegehäuses beschichtet werden. Denkbar ist auch, dass das Batteriegehäuse komplett mit dem Isolator beschichtet wird.

Vorzugsweise ist das Komponentengehäuse ebenfalls mit dem Isolator beschichtet. Dabei kann der Isolator ausschließlich auf einer dem Batteriegehäuse zugewandten Oberfläche des Komponentengehäuses beschichtet werden. Denkbar ist auch, dass das Komponentengehäuse komplett mit dem Isolator beschichtet wird.

Der Isolator zur Beschichtung des Batteriegehäuses und/oder des Komponentengehäuses und der Isolator zur Beschichtung der jeweiligen Befestigungsbohrungen und der Auflageflächen der Schraubenköpfe oder der Schäfte der jeweiligen elektrisch leitenden Schrauben können dabei gleich oder verschieden sein.

Bevorzugt umfasst das erfindungsgemäße Batteriesystem eine Trennschaltereinheit zum Abschalten eines Entladestroms oder eines Aufladestroms des mindestens einen Batteriemoduls. Bevorzugt ist die Trennschaltereinheit im Batteriegehäuse angeordnet. Dabei ist das mindestens eine Batteriemodul über die Trennschaltereinheit mit der mindestens einen elektrischen Komponente elektrisch verbunden.

Vorzugsweise weist das Batteriegehäuse eine zweite Temperierungseinrichtung auf. Die zweite Temperierungseinrichtung kann dabei einen zweiten

Massepotential gelegt. Weitere elektrische Komponenten, die durch das mindesten eine Batteriemoduls versorgt werden, sowie Gehäuse oder Gehäusen für die weiteren elektrischen Komponenten sind ebenfalls auf das gemeinsame Massepotential gelegt.

Wegen einer Impedanz der Leitung zwischen dem Minuspol des mindestens einen Batteriemoduls und dem elektrischen Massepotential weich das Potential des Minuspols von dem gemeinsamen Massepotential ab. Die weiteren elektrischen Komponenten, die durch das mindestens eine Batteriemoduls versorgt werden, sind jedoch für das gemeinsame Massepotential ausgelegt.

Dies führt dazu, dass die weiteren elektrischen Komponenten, die durch das mindestens eine Batteriemoduls versorgt werden, nicht im Batteriegehäuse integriert werden können, sofern das Batteriegehäuse mit dem Minuspol des mindestens einen Batteriemoduls verbunden ist. Werden die weiteren elektrischen Komponenten in einem anderen Gehäuse angeordnet oder weisen sie jeweils ein eignes Gehäuse auf, darf zwischen dem Batteriegehäuse und diesem andere Gehäuse oder diesen Gehäusen keine elektrisch leitende Verbindung bestehen. Nachteilig daran ist, dass das Batteriesystem so nicht in einer kompakten Weise aufgebaut werden kann.

Mit der erfindungsgemäßen Batteriesystem, das ein Batteriegehäuse für das mindestens eine Batteriemodul und die Steuereinheit sowie ein Komponentengehäuse für die weiteren elektrischen Komponenten aufweist, wobei das Batteriegehäuse und das Komponentengehäuse gegeneinander isoliert sind, können das Batteriegehäuse und das Komponentengehäuse in einer kompakten Weise zusammengebaut und auf unterschiedliche Massepotentiale gelegt werden.

Mit dem erfindungsgemäßen Batteriesystem ist somit ein Bedarf an Bauraum deutlich reduziert.

Ferner ist der Aufwand für elektrische Verbindungen zwischen dem mindestens einen Batteriemodul und den weiteren elektrischen Komponenten reduziert. Somit werden Herstellungskosten reduziert.

Mit dem erfindungsgemäßen Batteriesystem kann ein gemeinsamer Temperierungskreis für das Batteriegehäuse und das Komponentengehäuse eingesetzt werden. Dies führt zu einer weiteren Reduzierung der Herstellungskosten.

### Kurze Beschreibung der Zeichnungen

Ausführungsformen der Erfindung werden anhand der Zeichnungen und der nachfolgenden Beschreibung näher erläutert.

Es zeigt:

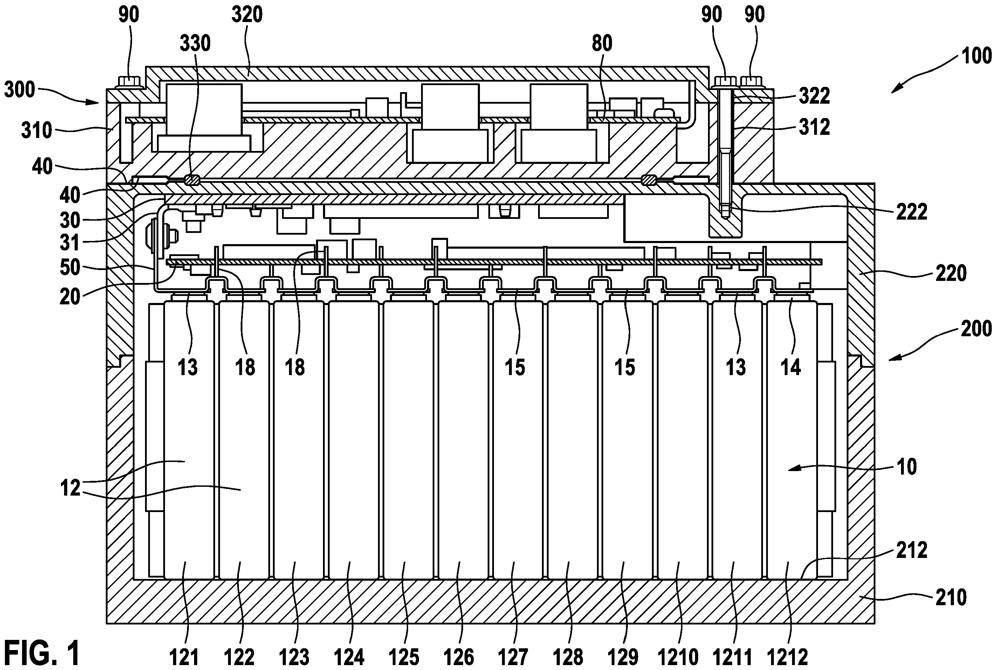

- Figur 1: eine schematische Schnittdarstellung eines erfindungsgemäßen Batteriesystems.

### Ausführungsformen der Erfindung

Figur 1 stellt den Gegenstand der Erfindung nur schematisch dar.

Figur 1 zeigt eine schematische Schnittdarstellung eines erfindungsgemäßen Batteriesystems 100. Dabei umfasst das Batteriesystem 100 ein Batteriegehäuse 200 aus Aluminiumguss, das ein Batteriegehäuseunterteil 210 und ein auf dem Batteriegehäuseunterteil 210 aufgesetztes Batteriegehäuseoberteil 220 aufweist.

Das Batteriesystem 100 umfasst ferner ein Komponentengehäuse 300 aus Aluminiumguss, das ein Komponentengehäuseunterteil 310 und ein Komponentengehäuseoberteil 320 aufweist.

Das Batteriesystem 100 umfasst weiterhin ein Batteriemodul 10, eine Steuereinheit 20 zur Steuerung und Überwachung des Batteriemoduls 10 und eine Trennschaltereinheit 30 zum Abschalten eines Entladestroms oder eines Aufladestroms des Batteriemoduls 10.

Das Batteriemodul 10 ist auf einem Boden 212 des Batteriegehäuseunterteils 210 angeordnet und umfasst dabei mehrere nebeneinander angeordnete prismatische Batteriezellen 12, die jeweils ein positives Terminal 13 und ein negatives Terminal 14 aufweisen. In Figur 1 sind dabei zwölf Batteriezellen 12, und zwar von links gesehen eine erste Batteriezelle 121 bis eine zwölfte Batteriezelle 1212, dargestellt. Selbstverständlich können mehr oder weniger als zwölf Batteriezellen 12 in dem Batteriemodul 10 angeordnet werden. Die Batteriezellen 12 sind dabei mittels mehrerer Zellverbinder 15 elektrisch seriell miteinander verbunden. Dabei stellt das positive Terminal 13 der ersten Batteriezelle 121 einen Pluspol des Batteriemoduls 10 dar und das negative Terminal 14 des zwölften Batteriezelle 1212 stellt einen Minuspol des Batteriemoduls 10 dar.

Denkbar ist aber auch, dass die Batteriezellen 12 parallel zueinander geschaltet werden.

Auf dem Batteriemodul 10 ist die Steuereinheit 20 angeordnet. Die Steuereinheit 20 ist dabei zur Steuerung und Überwachung über mehrere Leiter 18 mit dem Batteriemodul 10 bzw. den einzelnen Batteriezellen 12 elektrisch verbunden.

Oberhalb der Steuereinheit 20 ist die Trennschaltereinheit 30 zum Abschalten eines Entladestroms oder eines Aufladestroms des Batteriemoduls 10 angeordnet.

Die Trennschaltereinheit 30 weist dabei einen ersten Anschluss 31 und einen zweiten Anschluss (nicht dargestellt) auf. Der erste Anschluss 31 ist dabei mittels eines Verbinders 50 mit dem positiven Terminal 13 der ersten Batteriezelle 121, das den Pluspol des Batteriemoduls 10 darstellt, elektrisch verbunden.

Auf dem Batteriegehäuseoberteil 220 des erfindungsgemäßen Batteriesystems 100, ist das Komponentengehäuse 300 angeordnet, in dem eine elektrische Komponente 80, die als ein Gleichspannungswandler ausgebildet sein kann, angeordnet ist. Das Komponentengehäuse 300 weist dabei ein Komponentengehäuseunterteil 310 und ein auf dem Komponentengehäuseunterteil 310 aufgesetztes Komponentengehäuseoberteil 320 auf.

Dabei sind das Batteriegehäuseoberteil 220 und das Komponentengehäuseunterteil 310 jeweils mit einer Durchführung (nicht dargestellt) für Strom- und Signalübertragung versehen. Durch die Durchführungen ist die Trennschaltereinheit 30 mit der elektrischen Komponente 80 elektrisch verbunden.

Dabei ist das Batteriegehäuseoberteil 220 mit einem Isolator 40 beschichtet. Der Isolator 40 kann beispielsweise kathodischer Tauch-Lack sein. Denkbar ist auch, dass Harteloxal oder isolierendes Klebeband verwendet wird. Dabei kann der Isolator 40 ausschließlich auf einer dem Komponentengehäuseunterteil 310 zugewandten Oberfläche des Batteriegehäuseoberteils 220 beschichtet werden. Denkbar ist auch, dass das Batteriegehäuseoberteil 220 komplett mit dem Isolator 40 beschichtet wird.

Das Komponentengehäuseunterteil 310 ist dabei ebenfalls mit dem Isolator 40 beschichtet. Dabei kann der Isolator 40 ausschließlich auf einer dem Batteriegehäuseoberteil 220 zugewandten Oberfläche des Komponentengehäuseunterteils 310 beschichtet werden. Denkbar ist auch, dass das Komponentengehäuseunterteil 310 komplett mit dem Isolator 40 beschichtet wird.

Vorteilhaft können das Batteriegehäuseunterteil 210 und/oder das Komponentengehäuseoberteil 320 ebenfalls mit dem Isolator 40 beschichtet werden.

Das Batteriegehäuseoberteil 220, das Komponentengehäuseunterteil 310 und das Komponentengehäuseoberteil 320 sind miteinander verschraubt. Dabei weist das Batteriegehäuseoberteil 220 mehrere erste Befestigungsbohrungen 222 auf. Das Komponentengehäuseunterteil 310 weist mehrere zweite Befestigungsbohrungen 312 auf und das Komponentengehäuseoberteil 320 weist mehrere dritte Befestigungsbohrungen 322 auf. Dabei sind die zweiten und dritten Befestigungsbohrungen 312, 322 jeweils als eine Durchgangsbohrung ausgebildet. Zur Befestigung des Batteriegehäuseoberteils 220, des Komponentengehäuseunterteils 310 und des Komponentengehäuseoberteils 320 miteinander werden elektrisch nichtleitende Schrauben 90, wie beispielsweise Kunststoffschrauben, verwendet.

Zwischen dem Komponentengehäuseunterteil 310 und dem Batteriegehäuseoberteil 220 ist eine Dichtungsschnur 330 eingesetzt. In einem durch die Dichtungsschnur 330 umschlossenen Bereich (nicht dargestellt) zwischen dem Komponentengehäuseunterteil 310 und dem Batteriegehäuseoberteil 220 ist ein erster Temperierungskanal (nicht dargestellt) zur Durchleitung eines Temperierungsmediums ausgeführt. Dabei ist der erste Temperierungskanal gegen das Batteriegehäuseoberteil 220 und das Komponentengehäuseunterteil 310 isoliert.

Das Batteriegehäuse 200 kann eine zweite Temperierungseinrichtung (nicht dargestellt) aufweisen. Die zweite Temperierungseinrichtung kann dabei einen zweiten Temperierungskanal zur Durchleitung des Temperierungsmediums aufweisen, der im Material des Batteriegehäuseunterteils 210 und/oder des Batteriegehäuseoberteils 220 ausgeführt werden kann. Die zweite Temperierungseinrichtung kann auch als eine Peltier-Element-Einheit ausgebildet werden. Die als eine Peltier-Element-Einheit ausgebildete zweite Temperierungseinrichtung kann auf dem Boden 212 des Batteriegehäuseunterteils 210 und zwischen dem Boden 212 und dem Batteriemoduls 10 angeordnet werden.

Dabei kann der erste Temperierungskanal mit dem zweiten Temperierungskanal (nicht dargestellt) hydraulisch seriell geschaltet werden, um einen gemeinsamen Temperierungskreis zu bilden.

Für die Steuereinheit 20 ist ein Potential des Minuspols des Batteriemoduls 10, der durch das negative Terminal 14 der zwölften Batteriezelle 1212 dargestellt ist, als Massepotential ausgewählt.

Das Potential des Minuspols des Batteriemoduls 10 kann ebenfalls für das erste Massepotential des Batteriegehäuses 200 ausgewählt werden. Denkbar ist aber auch, dass das erste Massepotential ein Schwebepotential ist.

Für das zweite Massepotential des Komponentengehäuses 300 wird ein anderes Potential ausgewählt, das sich vom ersten Massepotential unterscheidet. Für die elektrische Komponente 80, die im Komponentengehäuse 300 angeordnet ist, ist das zweite Massepotential ausgewählt.

Wird das erfindungsgemäße Batteriesystem 100 in einem Kraftfahrzeug verwendet, kann das Komponentengehäuse 300 mit einer Karosserie des Kraftfahrzeugs elektrisch verbunden werden und somit ist das zweite Massepotential gleich einem Potential der Karosserie. Das Batteriegehäuse 200 kann dabei mit dem Minuspol des Batteriemoduls 10 elektrisch verbunden und somit ist das erste Massepotential gleich dem Potential des Minuspols. Das Batteriegehäuse 200 kann dabei auch auf ein Schwebepotential gelegt werden. Das heißt, dass das Batteriegehäuse 200 gegen alle andere elektrisch leitende Teile des Kraftfahrzeugs elektrisch isoliert ist.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Batteriesystem (100), umfassend
ein metallisches Batteriegehäuse (200) und
ein metallisches Komponentengehäuse (300),
wobei im Batteriegehäuse (200) mindestens ein Batteriemodul (10) mit mindestens einer Batteriezelle (12) und eine Steuereinheit (20) zur Steuerung und Überwachung des mindestens einen Batteriemoduls (10) angeordnet sind und
wobei im Komponentengehäuse (300) mindestens eine elektrische Komponente (80) angeordnet ist, die mit dem mindestens einen Batteriemodul (10) elektrisch verbunden ist, wobei
das Komponentengehäuse (300) auf dem Batteriegehäuse (200) angeordnet ist,
wobei das Komponentengehäuse (300) und das Batteriegehäuse (200) mechanisch miteinander verbunden und elektrisch gegeneinander isoliert sind, und dass
das Batteriegehäuse (200) auf ein erstes Massepotential gelegt ist und das Komponentengehäuse (300) auf ein zweites Massepotential gelegt ist, wobei sich das erste Massepotential vom zweiten Massepotential unterscheidet,
wobei zwischen dem Batteriegehäuse (200) und dem Komponentengehäuse (300) eine erste Temperierungseinrichtung ausgebildet ist, wobei die erste Temperierungseinrichtung gegen das Batteriegehäuse (200) und das Komponentengehäuse (300) isoliert ist und wobei
die erste Temperierungseinrichtung derart ausgebildet ist, dass zwischen einem Batteriegehäuseoberteil (220) und einem Komponentengehäuseunterteil (310) eine Dichtung (330) eingesetzt ist, wobei in einem durch die Dichtung (330) umschlossenen Bereich zwischen dem Batteriegehäuseoberteil (220) und dem Komponentengehäuseunterteil (310) ein erster Temperierungskanal ausgeführt wird, oder die erste Temperierungseinrichtung als eine Peltier-Element-Einheit ausgebildet ist.

2. Batteriesystem (100) nach Anspruch 1, **dadurch gekennzeichnet, dass** das Batteriegehäuse (200) und das Komponentengehäuse (300) stoffschlüssig oder formschlüssig miteinander verbunden sind.

3. Batteriesystem (100) nach Anspruch 1 oder 2, **dadurch gekennzeichnet, dass**
das Batteriegehäuse (200) und/oder das Komponentengehäuse (300) jeweils mit einem Isolator (40) beschichtet sind.

4. Batteriesystem (100) nach einem der Ansprüche 1 bis 3, **dadurch gekennzeichnet, dass**
im Batteriegehäuse (200) eine Trennschaltereinheit (30) zum Abschalten eines Entladestroms oder eines Aufladestroms des mindestens einen Batteriemoduls (10) angeordnet ist.

5. Batteriesystem (100) nach einem der Ansprüche 1 bis 4, **dadurch gekennzeichnet, dass**
das Batteriegehäuse (200) eine zweite Temperierungseinrichtung aufweist.

6. Batteriesystem (100) nach einem der Ansprüche 1 bis 5, **dadurch gekennzeichnet, dass**
die mindestens eine elektrische Komponente (80) als ein Gleichspannungswandler ausgebildet ist.

7. Kraftfahrzeug, das mindestens ein Batteriesystem (100) nach einem der Ansprüche 1 bis 6 umfasst.

8. Kraftfahrzeug nach Anspruch 7, **dadurch gekennzeichnet, dass** das erste Massepotential ein Schwebepotential ist.

9. Kraftfahrzeug nach Anspruch 7 oder 8, **dadurch gekennzeichnet, dass** das zweite Massepotential gleich einem Potential einer Karosserie des Kraftfahrzeugs ist.

## Claims

1. Battery system (100), comprising
a metallic battery housing (200) and
a metallic component housing (300),
wherein at least one battery module (10) having at least one battery cell (12) and a control unit (20) for controlling and monitoring the at least one battery module (10) are arranged in the battery housing (200), and
wherein at least one electrical component (80) is arranged in the component housing (300), which electrical component is electrically connected to the at least one battery module (10), wherein
the component housing (300) is arranged on the battery housing (200),
wherein the component housing (300) and the battery housing (200) are mechanically connected to one another and electrically insulated from one another, and wherein
the battery housing (200) is connected to a first earth potential and the component housing (300) is connected to a second earth potential, wherein the first earth potential is different from the second earth potential,
wherein a first temperature-control device is formed between the battery housing (200) and the component housing (300), wherein the first temperature-control device is insulated from the battery housing (200) and the component housing (300), and wherein
the first temperature-control device is designed in such a way that a seal (330) is inserted between a battery housing upper part (220) and a component housing lower part (310), wherein a first temperature-control channel is designed in a region enclosed by the seal (330) between the battery housing upper part (220) and the component housing lower part (310), or the first temperature-control device is in the form of a Peltier element unit.

2. Battery system (100) according to Claim 1, **characterized in that** the battery housing (200) and the component housing (300) are connected to one
another in a cohesive or form-fitting manner.

3. Battery system (100) according to Claim 1 or 2, **characterized in that** the battery housing (200) and/or the component housing (300) are both coated
with an insulator (40).

4. Battery system (100) according to one of Claims 1 to 3, **characterized in that** a disconnect switch unit (30) for disconnecting a discharging current or a charging current of the at least one battery module (10) is arranged in the battery housing (200).

5. Battery system (100) according to one of Claims 1 to 4, **characterized in that** the battery housing (200) has a second temperature-control device.

6. Battery system (100) according to one of Claims 1 to 5, **characterized in that** the at least one electrical component (80) is in the form of a DC-DC converter.

7. Motor vehicle, which comprises at least one battery system (100) according to one of Claims 1 to 6.

8. Motor vehicle according to Claim 7, **characterized in that** the first earth potential is a floating potential.

9. Motor vehicle according to Claim 7 or 8, **characterized in that** the second earth potential is equal to a potential of a body of the motor vehicle.

## Revendications

1. Système de batterie (100), comprenant
un boîtier de batterie métallique (200), et
un boîtier de composant métallique (300),
dans lequel au moins un module de batterie (10) pourvu d'au moins une cellule de batterie (12) et une unité de commande (20) pour commander et surveiller ledit au moins un module de batterie (10) sont disposés dans le boîtier de batterie (200), et
dans lequel dans le boîtier de composant (300), au moins un composant électronique (80) est disposé qui est relié électriquement audit au moins un module de batterie (10), dans lequel
le boîtier de composant (300) est disposé sur le boîtier de batterie (200),
dans lequel le boîtier de composant (300) et le boîtier de batterie (200) sont reliés mécaniquement l'un à l'autre et isolés électriquement l'un par rapport à l'autre, et
le boîtier de batterie (200) est relié à un premier potentiel de masse et le boîtier de composant (300) est relié à un deuxième potentiel de masse, le premier potentiel de masse étant différent du deuxième potentiel de masse,
dans lequel un premier dispositif d'équilibrage de température est réalisé entre le boîtier de batterie (200) et le boîtier de composant (300), le premier dispositif d'équilibrage de température étant isolé par rapport au boîtier de batterie (200) et au boîtier de composant (300), et dans lequel
le premier dispositif d'équilibrage de température est réalisé de telle sorte qu'un joint d'étanchéité (330) est inséré entre une partie supérieure de boîtier de batterie (220) et une partie inférieure de boîtier de composant (310), dans lequel dans une zone entourée par le joint d'étanchéité (330) entre la partie supérieure de boîtier (220) et la partie inférieure de composant (310), un premier canal d'équilibrage de température est pratiqué ou le premier dispositif d'équilibrage de température est réalisé sous la forme d'une unité à élément Peltier.

2. Système de batterie (100) selon la revendication 1, **caractérisé en ce que** le boîtier de batterie (200) et le boîtier de composant (300) sont reliés ensemble
par liaison de matière ou par complémentarité de forme.

3. Système de batterie (100) selon la revendication 1 ou 2, **caractérisé en ce que**
le boîtier de batterie (200) et/ou le boîtier de composant (300) sont respectivement recouverts d'un isolant (40).

4. Système de batterie (100) selon l'une quelconque des revendications 1 à 3, **caractérisé en ce que**
dans le boîtier de batterie (200), une unité de sectionneur (30) est disposée pour couper un courant de décharge ou un courant de charge dudit au moins un module de batterie (10).

5. Système de batterie (100) selon l'une quelconque des revendications 1 à 4, **caractérisé en ce que**
le boîtier de batterie (200) présente un deuxième dispositif d'équilibrage de température.

6. Système de batterie (100) selon l'une quelconque des revendications 1 à 5, **caractérisé en ce que**
ledit au moins un composant électrique (80) est réalisé sous forme de convertisseur CC/CC.

7. Véhicule automobile, comprenant au moins un système de batterie (100) selon l'une quelconque des revendications 1 à 6.

8. Véhicule automobile selon la revendication 7, **caractérisé en ce que** le premier potentiel de masse est un potentiel flottant.

9. Véhicule automobile selon la revendication 7 ou 8, **caractérisé en ce que** le deuxième potentiel de masse est identique à un potentiel d'une carrosserie du
véhicule automobile.
